# EUROPÄISCHE PATENTSCHRIFT

(11) **EP 0 475 897 B1**
(45) Veröffentlichungstag und Bekanntmachung des Hinweises auf die Patenterteilung: **03.08.1994**
(21) Anmeldenummer: 91810694.9
(22) Anmeldetag: 02.09.1991
(51) Int. Cl.: G03B 27/73

(54) **Verfahren zur Erstellung von fotographischen Farbkopien**
Method for producing photographic colour copies
Méthode pour la production de copies photographiques en couleur

(30) Priorität: 10.09.1990 CH 2930/90
(43) Veröffentlichungstag der Anmeldung: 18.03.1992
(73) Patentinhaber: GRETAG IMAGING AG, CH-8105 Regensdorf (CH)
(72) Erfinder: Kraft, Walter, Dr., CH-8049 Zürich (CH)
(74) Vertreter: Kleewein, Walter, Dr.

(56) Entgegenhaltungen:
- EP-A- 0 312 499
- US-A- 4 159 174
- US-A- 4 884 102

## Beschreibung

Die Erfindung betrifft ein Verfahren zur Erstellung von fotografischen Farbkopien von fotografischen Kopiervorlagen in einem fotografischen Farbkopiergerät gemäss Oberbegriff des Patentanspruchs 1.

Bei der Erstellung von fotografischen Farbkopien, insbesondere von Papierbildern, von fotografischen Kopiervorlagen, beispielsweise Negativfilmen oder Diapositiven, kann normalerweise nicht mit standardisierten, einheitlichen Kopierlichtimengen gearbeitet werden. Daher werden in fotografischen Kopiergeräten die Kopiervorlagen analysiert und gemäss den Analysedaten Farb- und Dichtekorrekturen ermittelt, aus denen die erforderlichen Kopierlichtinengen, insbesondere die Belichtungszeiten für die drei Grundfarben Blau, Grün und Rot bestimmt werden. Auf diese Weise können Belichtunsfehler bei der Erstellung der Kopiervorlage in der Farbkopie wieder kompensiert werden. Neben echten Fehlbelichtungen, die sich in extrem unter- oder überbelichteten Kopiervorlagen ausdrücken, können auf diese Weise auch Farbstiche, die aufgrund ungünstiger Beleuchtung (z.B. Neonlicht) oder aufgrund der Verwendung von ungeeignetem oder degradiertem Filmmaterial entstehen können, kompensiert werden. Die zu diesem Zweck eingesetzten Belichtungssteuerungsverfahren basieren im wesentlichen auf zwei Schritten:
a) Die Kopiervorlage wird spektral analysiert. Ziel dieser Analyse ist es einerseits bildwichtige Bereiche der Kopiervorlage von weniger wichtigen zu unterscheiden und andererseits Farbstiche aufgrund des Trägermaterials, ungünstiger Beleuchtung, degradierten Filmmaterials, Fehlbelichtungen usw. festzustellen.
b) Nach Massgabe der Analysedaten werden Kopierlichtmengen bzw. Belichtungszeiten für die drei Grundfarben Blau, Grün und Rot bestimmt, um Farbstiche zu kompensieren und wenigstens die bildwichtigen Bereiche der Kopiervorlage in der richigen Farbe und Dichte wiederzugeben.

Ein derartiges Belichtungssteuerungsverfahren ist beispielsweise in der EP-A-0 312 499 beschrieben. Bei diesem bekannten Verfahren, dessen prinzipieller Ablauf in Fig. 2 dargestellt ist, wird die Kopiervorlage bereichsweise, vorzugsweise punktförmig, abgetastet und das Messlicht jedes Abtastbereiches spektral analysiert. Aus den Spektralwerten f werden durch elektronische oder rechnerische Filterung den spektralen Empfindlichkeitsverläufen des Kopiermaterials angepasste Farbauszugswerte a der Kopiervorlage für die drei Grundfarben Blau, Grün und Rot gebildet. Durch Vergleich dieser Farbauszugswerte mit Referenzdichten d* beispielsweise einer Referenz-Kopiervorlage erhält man Dichteabweichungen c* in den drei Grundfarben Blau, Grün und Rot. Dabei ist zu beachten, dass auch die Referenzdichten d* aufgrund der spektralen Empfindlichkeiten des verwendeten Kopiermaterials ermittelt werden. Die Dichteabweichungen c* bilden die Eingangsdaten für die eigentliche Farb- und Dichtekorrektwprozedur D*. Um standardisierte Korrekturroutinen anwenden zu können, empfiehlt es sich, die Abhängigkeiten der Dichteabweichungen vom verwendeten Kopiermaterial zuvor noch zu reduzieren. Dazu werden die Dichteabweichungen c* mit einer sogenannten Papiermatrix P verknüpft. In der Farb- und Dichtekorrektwprozedur D* werden aus den ggf. der Transformation P unterworfenen Dichteabweichungen c* Korrekturwerte ²c erzeugt. Diese Korrekturwerte entsprechen im Idealfall den Abweichungen der Farbdichten der zu kopierenden Kopiervorlage von denjenigen einer unter optimalen Bedingungen erstellten Vorlage mit derselben Szene. Aus den Korrekturwerten ²c werden sodann die erforderlichen Kopierlichtmengen bzw. Belichtungszeiten für die Grundfarben Blau, Grün und Rot bestimmt, die wiederum den spektralen Empfindlichkeiten des verwendeten Kopiermaterials angepasst sein müssen. Zu diesem Zweck werden die Ausgangsdaten der Farb- und Dichtekorrekturprozedur D*, die Korrekturwerte ²c in den drei Grundfarben Blau, Grün und Rot mit einer Belichtungsmatrix B* verknüpft, welche die Wirkung der Matrix P wieder aufhebt. Vorzugsweise entspricht die Belichtungsmatrix B* der Inversen Matrix der Papiermatrix P. In der Praxis dient sie vielfach auch zur Korrektur von Fehlereinflüssen des Gesamtsystems.

Während mit diesem bekannten Belichtungssteuerungsverfahren Fehlbelichtungen und Farbstiche der Kopiervorlage in der Farbkopie kompensiert werden können, weist das Verfahren doch auch eine Reihe von Nachteilen auf. Die Bewertung der Spektralwerte jedes Abtastbereiches der Kopiervorlage "aus Sicht" der spektralen Empfindlichkeitsverläufe des Kopiermaterials bedingt eine eigene Bewertungsmatrix S sowie jeweils eine eigene Papiermatrix P und eine eigene Belichtungsmatrix B* für jedes der verwendeten Kopiermaterialien. Für ein und denselben Abtastbereich der Kopiervorlage erhält man damit je nach Art des verwendeten Kopiermaterials andere Farbauszugswerte. Gleiches gilt selbstverständlich auch für die Referenzdichten d*. Für jedes verwendete Kopiermaterial müssen daher neue, an die jeweiligen spektralen Empfindlichkeiten angepasste Referenzdichten bestimmt werden. Die aus dem Vergleich der Farbauszugswerte und der Referenzdichten resultierenden Dichteabweichungen sind ebenfalls von den spektralen Empfindlichkeitsverläufen des jeweils verwendeten Kopiermaterials abhängig. Im Extremfall bedingt dies, dass für jedes verwendete Kopiermaterial eine eigene an das jeweilige Kopiermaterial angepasste Farb- und Dichtekorrekturprozedur verwendet werden muss. Daher versucht man vielfach, die Kopiermaterialabhängigkeit der Dichteabweichungen, die die Eingangsdaten der Farb- und Dichtekorrekturroutinen darstellen, zu reduzieren, indem man sie mit einer 3x3 Papiermatrix verknüpft. Auf diese Art kann zwar vielfach mit nur einer einzigen standardisierten Korrekturroutine gearbeitet werden, man muss aber wieder für jedes verwendete Kopiermaterial eine eigene Papiermatrix P und die entsprechende Belichtungsmatrix B* betimmen. Selbst damit können aber die Eingangsdaten und die standardisierte Farb- und Dichtekorrekturroutine nicht für jedes Kopiermaterial optimal aufeinander abgestimmt werden, was wiederum zur Ermittlung nicht optimaler oder sogar fehlerhafter Kopierlichtmengen führen kann.

Es besteht daher der dringende Wunsch ein Verfahren zur Erstellung von fotografischen Farbkopien von einer fotografischen Kopiervorlage, insbesondere ein Belichtungssteuerungsverfahren, dahingehend zu verändern und verbessern, dass die angeführten Nachteile beseitigt werden. Das Verfahren soll einfach sein und zusammen mit allen gängigen Kopiermaterialsorten anwendbar sein.

Die Lösung dieser und noch weiterer Aufgaben erfolgt durch ein Verfahren zur Erstellung von fotografischen Farbkopien von einer fotografischen Kopiervorlage in einem fotografischen Farbkopiergerät, welches die im kennzeichnenden Teil des Patentanspruches 1 aufgeführten Verfahrensschritte umfasst. Bevorzugte Verfahrensführungen und Verfahrensvarianten sind Gegenstand der abhängigen Patentansprüche.

Im folgenden wird das erfindungsgemässe Verfahren beispielhaft anhand der Zeichnung erläutert. Es zeigen:
- Fig. 1: eine schematische Darstellung eines Farbkopiergerätes,
- Fig. 2: ein Ablaufschema eines Belichtungssteuerungsverfahrens des Stands der Technik,
- Fig. 3: ein Ablaufschema des Belichtungssteuerungsverfahrens des erfindungsgemässen Kopierverfahrens,
- Fig. 4 und Fig. 5: zwei Varianten des Belichtungssteuerungsverfahrens des erfindungsgemässen Kopierverfahrens,
- Fig. 6: spektrale Empfindlichkeiten verschiedener Kopiermaterialien und
- Fig. 7: ein Beispiel einer Gewichtsfunktion.

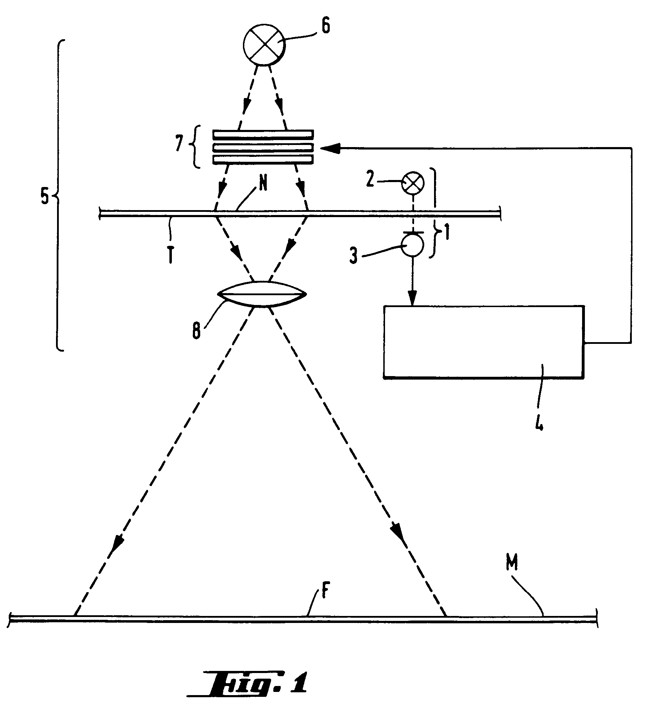

Das in Fig. 1 schematisch dargestellte fotografische Farbkopiergerät entspricht in seinem Aufbau dem in der EP-A-0 312 499 beschriebenen Gerät. Es umfasst im wesentlichen eine Messstation 1, eine Rechen- und Auswerteeinheit 4 und eine Belichtungsstation 5. Die Messstation weist insbesondere eine Messlichtquelle 2 und eine Detektoranordnung 3 auf. Die Detektoranordung 3 ist derart ausgebildet, dass sie einerseits das von einem Abtastbereich einer Kopiervorlage N kommende Messlicht spektral aufspaltet und andererseits die einzelnen Spektralanteile detektiert und in wellenlängen- und intensitätsabhängige elektrische Messsignale umsetzt. Die spektrale Aufspaltung des Messlichtes erfolgt beispielsweise duch ein Prisma, ein Beugungsgitter oder ein Spektralfilter. Die einzelnen Spektralanteile werden mit einem lichtelektrischen Wandler, insbesondere einem CCD-Bildsensor (Charge-Coupled-Device), detektiert und umgeformt. Der lichtelektrische Wandler ist an die Rechen- und Auswerteeinheit 4 angeschlossen zur Uebertragung der Messsignale. Die Belichtungsstation 5 ist ebenfalls mit der Rechen- und Auswerteeinheit 4 verbunden. Die Belichtungsstation umfasst im wesentlichen eine Kopierlichtquelle 6, einen Satz servogesteuerter Farbverschlüsse 7 und eine Abbildungsoptik 8 zur Projektion der Kopiervorlage N auf das Kopiermaterial M zur Erstellung der fotografischen Kopie F.

Die fotografische Kopiervorlage N wird in der Messstation 1 des fotografischen Farbkopiergerätes bereichsweise, vorzugsweise punktweise, vom Lichtstrahl der Messlichtquelle 2 abgetastet. Das von jedem Abtastbereich der Kopiervorlage N transmittierte oder remittierte Messlicht wird der Detektoranordnung 3 zugeführt, spektral zerlegt und in wellenlängen- und intensitätsabhängige elektrische Messsignale umgesetzt. Die elektrischen Messsignale werden digitalisiert und zu der Rechen- und Auswerteeinheit 4 weitergeleitet, wo sie zur Bestimmung der erforderlichen Kopierlichtmengen, insbesondere der logarithmischen Belichtungs-Korrektur, für die Grundfarben Blau, Grün und Rot ausgewertet werden. Die für die gesamte Kopiervorlage ermittelten Kopierlichtänderungen e für die drei Grundfarben Blau, Grün und Rot werden in Steuersignale umgeformt und an die Belichtungsstation 5 übergeben. In der Belichtungsstation werden mit Hilfe dieser Steuersignale die Kopierlichtquelle 6 und die servogesteuerten Farbverschlüsse 7 gesteuert, um eine fotografische Farbkopie F von der Kopiervorlage N auf das Kopiermaterial M zu belichten.

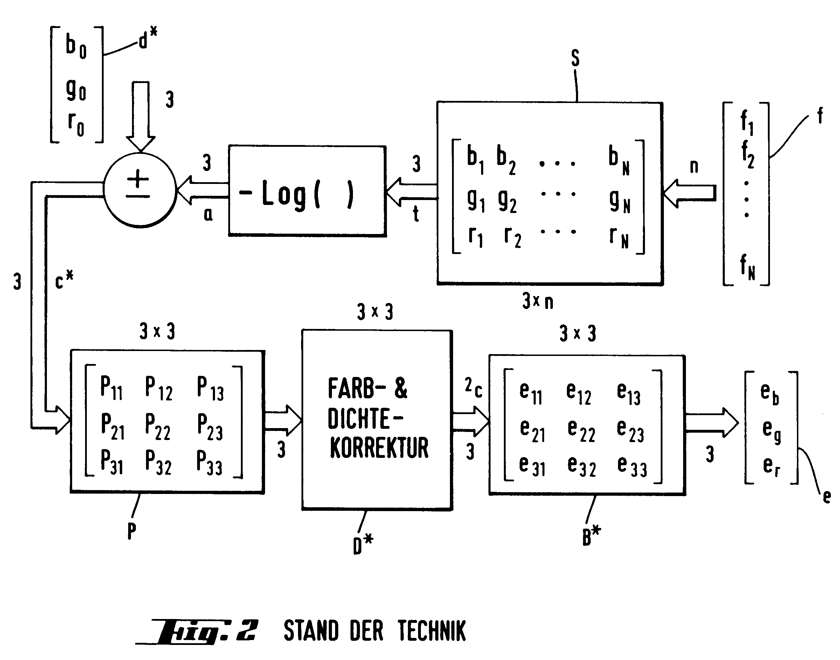

Das aus der EP-A-0 312 499 bekannte Belichtungssteuerungsverfahren zur Auswertung der Messsignale und zur Bestimmung der erforderlichen Kopierlichtinengen bzw. Belichtungszeiten e für die drei Grundfarben Blau, Grün und Rot wurde eingangs unter Bezugnahme auf das in Fig. 2 dargestellte Ablaufschema erläutert. Dabei gibt die Empfindlichkeitsmatrix S die Empfindlichkeit des Kopiermaterials M bezüglich der Wellenlängen wieder, in denen der Spektralverlauf des vom jeweiligen Abtastbereich der Kopiervorlage N stammenden Messlichtes erfasst wird. Die Papiermatrix P dient dazu, die Abhängigkeit der Messwerte von der Empfindlichkeit des verwendeten Kopiermaterials zu reduzieren. Sie wird beispielsweise durch lineare Regression aus zwei Sätzen von Messwerten, welche denselben Vorlagenbereichen entsammen, bestimmt. Dabei werden die Messwertsätze einmal mit den Empfindlichkeiten eines Referenzkopiermaterials, das andere mal mit den Empfindlichkeiten eines anderen, neuen Kopiermaterialfabrikats gemessen. Die Belichtungsmatrix B* ergibt sich aus der Papiermatrix P. Idealerweise stellt die Belichtungsmatrix B* die inverse Matrix zur Papiermatrix P dar.

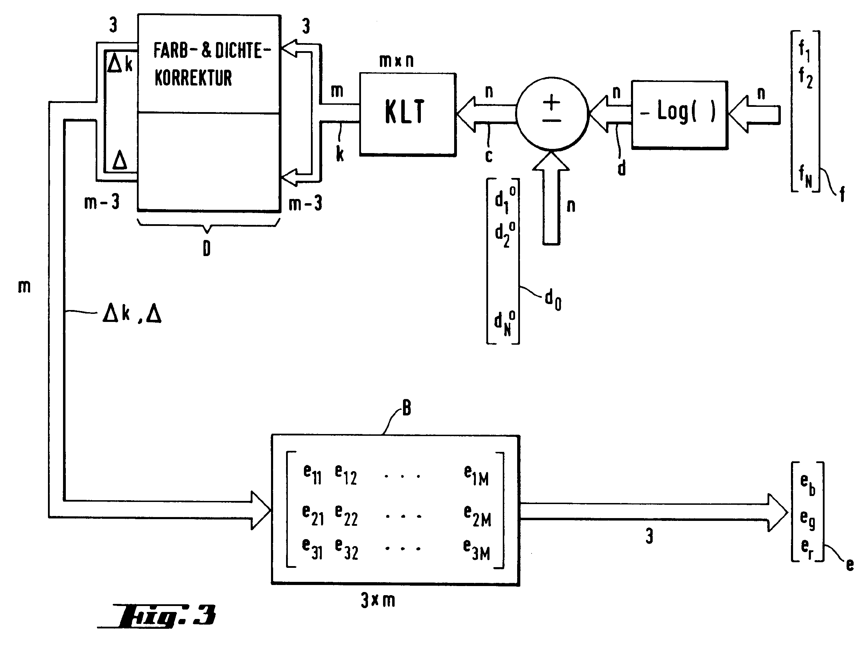

Das erfindungsgemässe Kopierverfahren unterscheidet sich von diesem bekannten Verfahren durch die Art der Auswertung der Messsignale zur Bestimmung der erforderlichen Kopierlichtmengen bzw. Belichtungskorrekturen e, deren prinzipieller Ablauf in Fig. 3 dargestellt ist. Im Gegensatz zu dem bekannten Verfahren werden die n spektralen Messsignale f jedes Abtastbereiches (diese entsprechen ja den spektralen Transmissionen bzw. Remissionen des jeweiligen Abtastbereiches) durch Logarithmieren in n spektrale Dichtewerte d umgeformt, ohne sie zuvor "aus Sicht" der spektralen Empfindlichkeiten des Kopiermaterials M zu bewerten. Diese n spektralen Dichtewerte d werden sodann mit Referenzdichten dₒ einer Norm-Kopiervorlage verglichen und zu n spektralen Dichtedifferenzen c verknüpft. Die spektralen Referenzdichten dₒ können durch die Analyse einer neutral grauen Norm-Kopiervorlage ermittelt werden. Vorzugsweise aber werden sie durch eine Mittelung der gemessenen spektralen Dichtewerte d einer Vielzahl von Kopiervorlagen N bestimmt. Es versteht sich, dass die Referenzdichten dₒ auch gleich Null sein können. Auch können die derart bestimmten spektralen Referenzdichten laufend angepasst werden, indem einfach die spektren Dichtewerte d weiterer aktueller Kopiervorlagen in die Mittelung miteinbezogen werden. Es versteht sich, dass auch bei der Ermittlung der spektralen Referenzdichten dₒ keine an die spektralen Empfindlichkeiten des verwendeten Kopiermaterials M angepasste Bewertung erfolgt.

Vor der eigentlichen Farb- und Dichtekorrektur werden die n Dichtedifferenzen c einer Datenkompression unterworfen. Dabei werden aus den ursprünglichen n Dichtedifferenzen c durch eine orthogonale Transformation m < n Transformationskoeffizienten k gewonnen. Die m resultierenden Transformationskoeffizienten k sind selbstverständlich immer noch unabhängig von den spektralen Empfindlichkeiten des verwendeten Kopiermaterials M.

Die orthogonale Transformation, die bei der Datenkompression angewendet wird, kann beispielsweise eine Diskrete Cosinues Transformation oder eine Diskrete Fourier Transformation sein, wie sie beispielsweise von N. Ahmed und K.R. Rao in Orthogonal Transforms for Digital Signal Processing, by Springer Verlag, Berlin-Heidelberg - New York 1975 (Library of Congress Catalog Card No. 73- 18912) beschrieben sind.

Die gewünschte Datenkompression bzw. Reduktion der Daten wird dabei dadurch erreicht, dass aus dem vollständigen Satz von n Basisvektoren diejenigen m ausgewählt werden, welche für die Charakterisierung der Dichtedifferenzen c am relevantesten sind. Verwendet man als Auswahlkriterium die Varianz der Transformationskoeffizienten k, indem man nur diejenigen m Transformationskoeffizienten mit der grössten Varianz berücksichtigt, so lassen sich die Dichtedifferenzen c mittels einer Inversen Transformation mit dem kleinsten mittleren quadratischen Fehler rekonstruieren. Die Inverse Matrix stellt dabei die transponierte n x m Matrix der ursprünglichen orthogonalen Transformationsmatrix dar.

Die optimale Transformation im Sinn des mittleren quadratischen Rekonstruktionsfehlers stellt jedoch die sogenannte Karhunen-Loève-Transformation dar, die gleichfalls in der zuvor zitierten Publikation von N. Ahmed und K.R. Rao beschrieben ist. Bei der Karhunen-Loève-Transformation wird der Vektor der spektralen Dichtedifferenzen c ebenfalls mit einer m x n Transformationsmatrix, der Karhunen-Loève-Transformationsmatrix KLT multipliziert. Die Karhunen-Loève-Transformationsmatrix KLT wird von m orthonormalen Zeilenvektoren mit jeweils n Komponenten gebildet.

Im Gegensatz zu den oben erwähnten "problemunabhängigen" Transformationen ist die Karhunen-Loève-Transformation problemangepasst. Die Basisvektoren der Transformationsmatrix KLT sind abhängig von den statistischen Eigenschaften der zu transformierenden Messdaten. Sie sind definiert als die Eigenvektoren der (über eine Vielzahl von Messdaten ermittelten) Kovarianzmatrix der Dichtedifferenzen c. Von diesen n Basisvektoren werden wiederum nur diejenigen m mit der grössten Varianz der entsprechenden Transformationskoeffizienten k berücksichtigt. Gleichzeitig stellen die ausgewählten Basisvektoren die den m grössten Eigenwerten zugeordneten Eigenvektoren dar. Die Kovarianzmatrix und damit die Transformationsmatrix wird beispielsweise direkt in der Rechen- und Auswerteeinheit 4 durch Auswertung einer hinreichend grossen Anzahl gemessener Vorlagendichtespektren bestimmt. Auf diese Weise ist es auch einfach möglich, die Transformationsmatrix periodisch den aktuellen statistischen Eigenschaften der verwendete Kopiervorlagen neu anzupassen.

Von den m ausgewählten Transformationskoeffizienten k kommt vorzugsweise den drei Koeffizienten mit der grössten Varianz eine besondere Rolle zu, indem sie als Eingangsdaten für die Farb- und Dichtekorrekturprozedur verwendet werden. Die drei ausgewählten Koeffizienten werden also analog zu den Farbauszugswerten in den drei Grundfarben Blau, Grün und Rot bei den bekannten Verfahren behandelt. Die restlichen m-3 Transformationskoeffizienten stellen geringfügige Abweichungen der spektralen Dichten jedes Abtastbereiches der Kopiervorlage N von den Neutraldichten dₒ dar und werden jeweils über eine gesamte Kopiervorlage N oder auch über mehrere Kopiervorlagen gemittelt. Aus diesen mittleren Abweichungen Δ und den von der Farb- und Dichtekorrekturprozedur D berechneten Abweichungen Δk werden anschliessend die logarithmischen Belichtungskorrekturen e berechnet. Dabei werden die Abweichungen mit einer 3 x m Belichtungsmatrix B multipliziert. Mit Hilfe der Belichtungsmatrix B werden die Abweichungen an die verschiedenen Kopiermaterial-Fabrikate angepasst. Die Bestimmung der Belichtungsmatrix B erfolgt beispielsweise iterativ, indem man sie solange variiert, bis Testkopiervorlagen einer Grautafel unabhängig vom verwendeten Vorlagenmaterial und Belichtungsgrad möglichst identische Kopien ergeben.

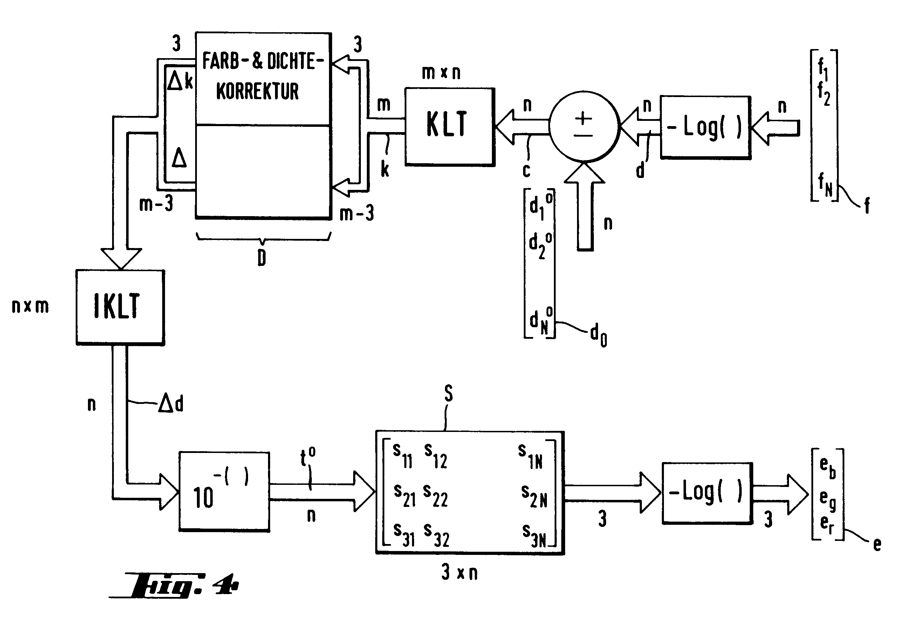

Bei der in Fig. 4 dargestellten Verfahrensvariante werden die drei Abweichungen Δk und die m-3 mittleren Abweichungen Δ mit Hilfe der Inversen Karhunen-Loève-Transformation IKLT in n Dichtekorrekturwerte Δd umgeformt, bevor daraus die erforderlichen Kopierlichtmengen bzw. Belichtungskorrekturen e für die drei Grundfarben Blau, Grün und Rot bestimmt werden. Nach der Entlogarithmierung erhält man daraus n Transmissionswerte t^{o}. Die Anpassung an die spektralen Empfindlichkeiten des verwendeten Kopiermaterials M erfolgt durch eine Verknüpfung dieser Transmissionswerte t^{o} mit einer 3 x n Empfindlichkeitsmatrix S. Diese beschreibt wiederum die spektralen Empfindlichkeiten des Kopiermaterials M bzw. der im Kopiermaterial M enthaltenen drei Farbstoffschichten. Die erforderlichen logarithmischen Belichtungskorrekturen e für die drei Grundfarben Blau, Grün und Rot erhält man durch erneutes Logarithmieren der drei aus der Verknüpfung resultierenden Werte.

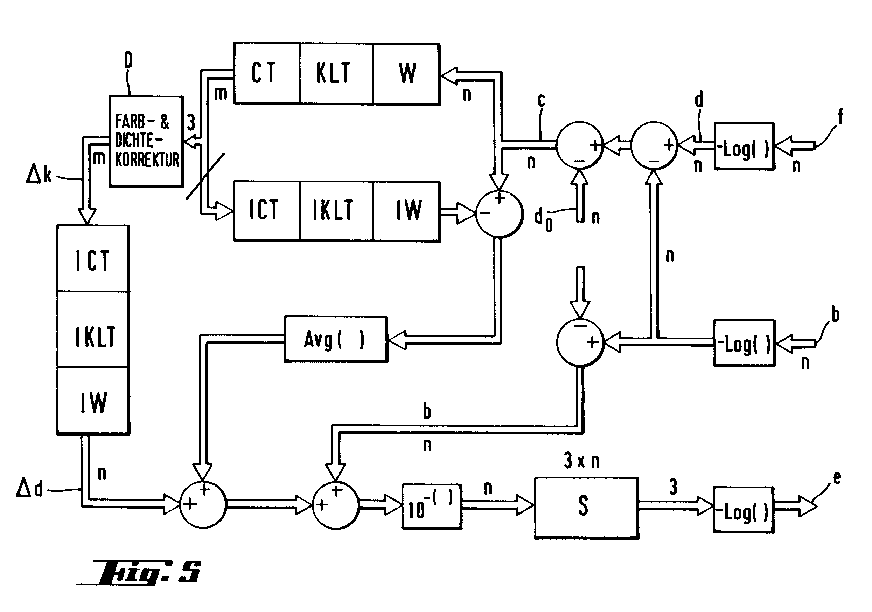

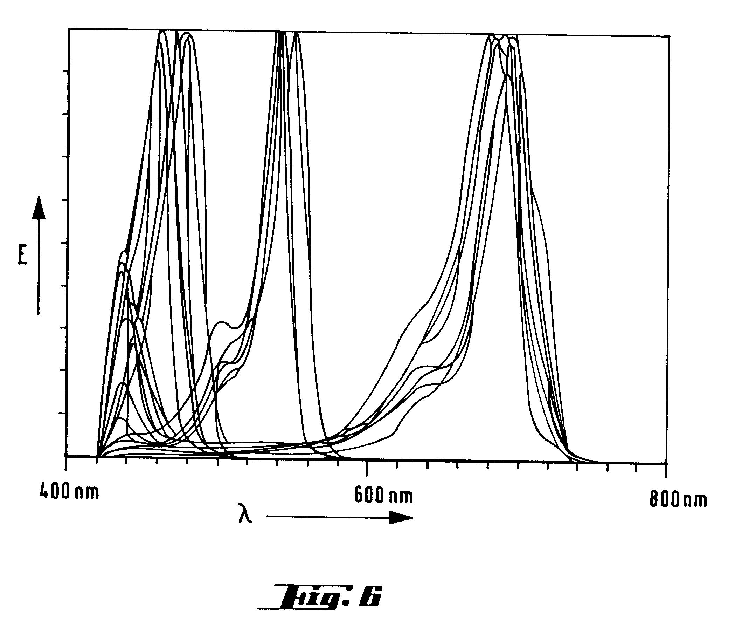

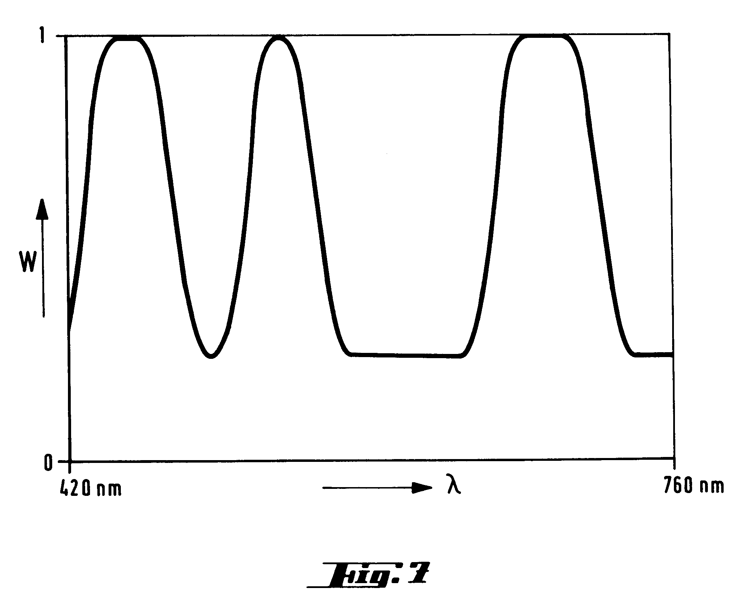

Bei der in Fig. 5 dargestellten Verfahrensvariante werden von dem Vorlagenmaterial T sogenannte Schleierdichten (im Falle eines Negativfilms sogenannte Maskendichten) b bestimmt. Dies erfolgt z.B. durch Ausmessen eines Bereiches der Vorlage zwischen zwei Kopiervorlagen N, im Falle eines Negativfilms beispielsweise auf dem Filmsteg. Diese Schleierdichten b werden von den für jeden Abtastbereich gemessenen spektralen Dichten d abgezogen, bevor die spektralen Dichtedifferenzen c bestimmt werden. Vor der Verknüpfung mit der Empfindlichkeitsmatrix S werden die Vorlagendichten b wieder zu den n Dichtekorrekturwerten hinzuaddiert. Vorzugsweise werden dabei die spektralen Dichtedifferenzen c vor ihrer Transformation mit einer umkehrbaren Gewichtsfunktion W gewichtet, wobei nach der Anwendung der Inversen Karhunen-Loève-Transformation IKLT die Dichtekorrekturwerte auch wieder mit der Inversen Gewichtsfunktion IW verknüpft werden. Die Gewichtsfunktion W ist dabei vorzugsweise derart gewählt, dass sie den spektralen Dichtedifferenzen c in denjenigen Spektralbereichen das höchste Gewicht verleiht, in denen die spektralen Empfindlichkeiten des Kopiermaterials M am grössten sind. In den Fig. 6 und 7 sind beispielhaft die spektralen Empfindlichkeitsverläufe verschiedener Kopiermaterialien M sowie eine mittlere Gewichtsfunktion W dargestellt.

Sollten die ermittelten und derart gewichteten drei Transformationskoeffizienten k noch nicht die Randbedingungen für die Anwendung bereits existierender Farb- und Dichtekorrekturroutinen erfüllen, beispielsweise die Grössenordnungen der Koeffizienten nicht denen der ansonsten bei bekannten Verfahren eingesetzten Farbauszugswerte entsprechen, so können, wie in Fig. 5 angedeutet, die Transformationskoeffizienten k zuvor noch mit einer umkehrbaren Farbtransformation CT angepasst werden bzw. ihre Signalpegel angepasst werden. Unmittelbar nach der Farb- und Dichtekorrektur müssen die farb- und dichtekorrigierten Transformationskoeffizienten Δk jedoch mit der Umkehrfunktion ICT verknüpft werden, um diese künstliche Anpassung wieder rückgängig zu machen.

Bei dem erfindungsgemässen Verfahren sind die Analysewerte und die ermittelten Korrekturwerte für Farbe und Dichte der zu erstellenden Kopie unabhängig von den spektralen Empfindlichkeiten des verwendeten Kopiermaterials. Erst unmittelbar vor bzw. während der eigentlichen Bestimmung der erforderlichen Kopierlichtmengen bzw. Belichtungszeiten erfolgt eine Bewertung der Korrekturwerte unter Berücksichtigung der spektralen Empfindlichkeiten des Kopiermaterials. Auf diese Weise erhält man immer nur einen Satz von Analysedaten und Korrekturwerten, unabhängig davon, welches Kopiermaterial verwendet wird. Auch kommt man mit nur einem Satz von Referenzwerten aus. Durch die orthogonale Transformation der Analysedaten kann die Anzahl der spektralen Werte reduziert werden. Aus den derart ermittelten Transformationskoeffizienten kann ein Satz von Koeffizienten ausgewählt werden, der im wesentlichen den üblicherweise ermittelten Farbauszugswerten für die Grundfarben Blau, Grün und Rot entspricht. Im Gegensatz zu den Farbauszugswerten sind die ausgewählten Koeffizienten insbesondere im Fall der Karhunen-Loève-Transformation unkorreliert und beschreiben das Dichtespektrum der abgetasteten Kopiervorlagenbereiche über den gesamten genutzten Spektralbereich mit der grösstmöglichen Genauigkeit. Durch zusätzliche Wichtungen und Signal-bzw. Datenanpassungen kann das Verfahren zusammen mit bereits bestehenden Farb- und Dichtekorrekturroutinen angewendet werden.

## Patentansprüche

1. Verfahren zur Erstellung von fotografischen Farbkopien (F) von einer fotografischen Kopiervorlage (N) in einem fotografischen Farbkopiergerät, welches die folgenden Verfahrensschritte umfasst:
a) die Kopiervorlage (N) wird in einer Messstation (1) des fotografischen Farbkopiergerätes bereichsweise, vorzugsweise punktweise, abgetastet;
b) das von jedem Abtastbereich der Kopiervorlage (N) transmittierte oder remittierte Messlicht wird einer Detektoranordnung (3) zugeführt, spektral zerlegt und in wellenlängen- und intensitätsabhängige elektrische Messignale (f) umgesetzt;
c) die Messignale (f) werden digitalisiert und einer Rechen- und Auswerteeinheit (4) zugeführt, und zur Bestimmung von erforderlichen Kopierlichtmengen in den Grundfarben Blau, Grün und Rot ausgewertet;
d) die für die Kopiervorlage (N) ermittelten Kopierlichtmengen und Belichtungskorrekturen (e) werden in Steuersignale umgeformt und an eine Belichtungsstation (5) übergeben, in der das Kopiermaterial (M) zur Erstellung der Farbkopien (F) von der Kopiervorlage (N) belichtet wird;
gekennzeichnet durch die folgenden Verfahrensschritte:
e) die Messignale (f) jedes Abtastbereiches der Kopiervorlage (N) werden in spektrale Dichtewerte (d) umgeformt, mit spektralen Referenzdichten (dₒ) verglichen, und spektrale Dichtedifferenzen (c) gebildet;
f) die spektralen Dichtedifferenzen (c) werden einer Datenkompression unterworfen, wobei die ursprünglichen n Dichtedifferenzen (c) durch eine orthogonale Transformation in m < n Transformations koeffizienten (k) umgewandelt werden, und aus der Anzahl der m Transformationskoeffizienten (k) diejenigen Koeffizienten ausgewählt werden, aus welchen sich die ursprünglichen Dichtedifferenzen (c) innerhalb eines vorgebbaren Genauigkeitskriteriums rekonstruieren lassen;
g) die ausgewählten Transformationskoeffizienten werden als Eingangsdaten einer Farb- und Dichtekorrekturprozedur (D) verwendet und Abweichungen (Δk) ermittelt;
h) die Abweichungen (Δk) werden gemäss den spektralen Empfindlichkeiten des Kopiermaterials (M), vorzugsweise in den drei Grundfarben Blau, Grün und Rot, ausgewertet und daraus die erforderlichen Kopierlichtmengen und die Belichtungskorrekturen (e) für die Grundfarben Blau, Grün und Rot bestimmt.

2. Verfahren nach Patentanspruch 1, dadurch gekennzeichnet, dass aus der Anzahl der m Transformationskoeffizienten (k) jene drei Koeffizienten als Eingangsdaten für die Farb-und Dichtekorrektur ausgewählt werden, welche die grösste Varianz aufweisen, und dass als Genauigkeitskriterium der kleinste mittlere quadratische Rekonstruktionsfehler gewählt wird.

3. Verfahren nach Patentanspruch 1 oder 2, dadurch gekennzeichnet, dass die nicht ausgewählten Transformationskoeffizienten über die gesamte Kopiervorlage gemittelt werden und bei der Ermittlung der erforderlichen Kopierlichtmengen und Belichtungskorrekturen (e) mitberücksichtigt werden.

4. Verfahren nach Patentanspruch 3, dadurch gekennzeichnet, dass die orthogonale Transformation mit Hilfe einer umkehrbaren Transformationsmatrix durchgeführt wird, die von m-Zeilenvektoren mit n Komponenten gebildet wird.

5. Verfahren nach Patentanspruch 4, dadurch gekennzeichnet, dass als Transformation die Karhunen-Loève Transformation angewendet wird, wobei die m-Zeilenvektoren der Karhunen-Loève-Transformationsmatrix (KLT) reell und orthonormal gewählt werden und die Basisvektoren der Tranformationsmatrix bilden.

6. Verfahren nach Patentanspruch 5, dadurch gekennzeichnet, dass als Basisvektoren der Karhunen-Loève-Transformationsmatrix (KLT) die Eigenvektoren einer aus einer Vielzahl von verschiedenen Kopiervorlagen (N) ermittelten Kovarianzmatrix der Dichtedifferenzen (c) verwendet werden.

7. Verfahren nach Patentanspruch 6, dadurch gekennzeichnet, dass die Abweichungen (Δk) mit Hilfe der Inversen Karhunen-Loève Transformation (IKLT) in n Dichtekorrekturwerte (Δd) rücktransformiert werden und anschliessend zur Bestimmung der erforderlichen Kopierlichtmengen und Belichtungskorrekturen (e) für die drei Grundfarben Blau, Grün und Rot ausgewertet werden.

8. Verfahren nach Patentanspruch 7, dadurch gekennzeichnet, dass zur Anpassung der ermittelten Kopierlichtmengen und Belichtungskorrekturen (e) für die Grundfarben Blau, Grün und Rot an das verwendete Kopiermaterial (M) die n Dichtekorrekturwerte (Δd) mit einer 3 x n Empfindlichkeitsmatrix (S) verknüpft werden, welche die spektralen Empfindlichkeiten des Kopiermaterials (M) beschreibt.

9. Verfahren nach Patentanspruch 8, dadurch gekennzeichnet, dass Schleierdichten (b) des Vorlagenmaterials (T) bestimmt werden, dass diese Schleierdichten (b) vor der Bestimmung der spektralen Dichtedifferenzen (c) von den spektralen Dichten (d) abgezogen werden, und dass die Schleierdichten (b) zu den Dichtekorrekturwerten (Δd) hinzuaddiert werden, bevor diese mit der Empfindlichkeitsmatrix (S) des Kopiermaterials (M) verknüpft werden.

10. Verfahren nach Patentanspruch 9, dadurch gekennzeichnet, dass die spektralen Dichtedifferenzen (c) vor ihrer Transformation mit einer umkehrbaren Gewichtsfunktion (W) verknüpft werden, und dass die Dichtekorrekturwerte (Δd) mit einer zu dieser Gewichtsfunktion (W) inversen Funktion (IW) verknüpft werden, bevor diese mit der Empfindlichkeitsmatrix (S) des Kopiermaterials (M) verknüpft werden.

11. Verfahren nach Patentanspruch 10, dadurch gekennzeichnet, dass die Gewichtsfunktion (W) den spektralen Dichtedifferenzen (c) in denjenigen Spektralbereichen das höchste Gewicht verleiht, in denen die spektralen Empfindlichkeiten des Kopiermaterials (M) am grössten sind.

12. Verfahren nach Patentanspruch 10 oder 11, dadurch gekennzeichnet, dass die Eingangsdaten der Farb- und Dichtekorrekturprozedur (D), die Transformationskoeffizienten (k), mit Hilfe einer umkehrbaren Farbtransformation (CT) bezüglich ihrer Grössenordnung bzw. ihrer Signalpegel an die Grössenordnungen bzw. Signalpegel der für die Anwendung bekannter Farb- und Dichtekorrekturprozeduren erforderlichen Eingangsdaten angepasst werden, und dass diese künstliche Anpassung durch Verknüpfung der farb- und dichtekorrigierten Transformationskoeffizienten (Δk) mit der Umkehrfunktion (ICT) wieder rückgängig gemacht wird.

13. Verfahren nach einem der vorangehenden Patentansprüche, dadurch gekennzeichnet, dass die spektralen Referenzdichten (dₒ) durch eine Mitteilung der gemessenen spektralen Dichtewerte einer Vielzahl von Kopiervorlagen (N) bestimmt werden und laufend angepasst werden.

## Claims

1. A process for the production of photographic colour copies (F) of a photographic copy master (N) in a photographic colour copy apparatus, comprising the following steps:
a) scanning the copy master (N) in a measuring station (1) of the photographic colour copy apparatus by regions, preferably by points;
b) supplying the measuring light transmitted or reflected by each scanning region of the copy master (N) to a detector arrangement (3); spectrally splitting the measuring light and converting it into wavelength- and intensity-dependent electrical measuring signals (f);
c) digitalising the measuring signals (f) and supplying them to a calculating and evaluating unit (4) and, in order to determine the quantities of copy light required, evaluating them for the primary colours blue, green and red; and
d) converting the quantities of copy light and the exposure corrections (e) determined for the copy master (N) into control signals and supplying those signals to an exposure station (5) in which the copy material (M) is exposed in order to produce colour copies (F) of the copy master (N);
which process also comprises the following steps:
e) converting the measuring signals (f) of each scanning region of the copy master (N) into spectral density values (d), comparing the spectral density values with spectral reference densities (dₒ), and forming spectral density differences (c);
f) subjecting the spectral density differences (c) to data compression, the original n density differences (c) being converted by an orthogonal transformation into m < n transformation coefficients (k), and selecting from among the m transformation coefficients (k) those coefficients from which the original density differences (c) can be reconstructed within a predetermined accuracy criterion;
g) using the selected transformation coefficients as input data for a colour and density correction procedure (D) and determining deviations (Δ k);
h) evaluating the deviations (Δk) in accordance with the spectral sensitivities of the copy material (M), preferably in the three primary colours blue, green and red, and determining therefrom the necessary quantities of copy light and the exposure corrections (e) for the primary colours blue, green and red.

2. A process according to claim 1, which comprises selecting as the input data for the colour and density correction from among the m transformation coefficients (k) those three coefficients that have the greatest variance, and choosing the smallest mean square reconstruction error as the accuracy criterion.

3. A process according to either claim 1 or claim 2, which comprises averaging the transformation coefficients not selected over the entire copy master and using those coefficients to determine the necessary quantities of copy light and exposure corrections (e).

4. A process according to claim 3, which comprises using a reversible transformation matrix formed of m line vectors with n components for the orthogonal transformation.

5. A process according to claim 4, which comprises using as the transformation a Karhunen-Loève transformation, the m line vectors of the Karhunen-Loève transformation matrix (KLT) selected being real and orthonormal and forming the base vectors of the transformation matrix.

6. A process according to claim 5, which comprises using as the base vectors of the Karhunen-Loève transformation matrix (KLT) the proper vectors of a covariance matrix, determined from a plurality of different copy masters (N), of the density differences (c).

7. A process according to claim 6, which comprises retransforming the deviations (Δk) using an inverse Karhunen-Loève transformation (IKLT) into n density correction values (Δd), and then evaluating them for the three primary colours blue, green and red to determine the necessary copy light quantities and exposure corrections (e).

8. A process according to claim 7, which comprises combining the n density correction values (Δd) with a 3 x n sensitivity matrix (S) describing the spectral sensitivities of the copy material (M) to adjust the determined copy light quantities and exposure corrections (e) for the primary colours blue, green and red to the copy material (M) being used.

9. A process according to claim 8, which comprises determining haze densities (b) of the master material (T), deducting the haze densities (b) from the spectral densities (d) prior to the determination of the spectral density differences (c), and adding the haze densities (b) to the density correction values (Δd) prior to their combination with the sensitivity matrix (S) of the copy material (M).

10. A process according to claim 9, which comprises combining the spectral density differences (c), prior to their transformation, with a reversible weighting function (W), and combining the density correction values (Δd) with a function (IW) inverse to the said weighting function (W) prior to the combination of the said density correction values with the sensitivity matrix (S) of the copy material (M).

11. A process according to claim 10, wherein the weighting function (W) assigns the heaviest weighting to the spectral density differences (c) in those spectral regions in which the spectral sensitivities of the copy material (M) are highest.

12. A process according to either claim 10 or claim 11, which comprises adjusting the input data for the colour- and density-correction procedure (D), the transformation coefficients (k), with the aid of a reversible colour transformation (CT) as regards their order of magnitude or signal levels to the orders of magnitude or signal levels of the input data required for the use of known colour- and density-correction procedures, and then reversing the said artificial adjustment by combining the colour- and density-corrected transformation coefficients (Δk) with the reversing function (ICT).

13. A process according to any one of the preceding claims, which comprises determining the spectral reference densities (dₒ) by averaging the measured spectral density values of a plurality of copy masters (N) and continuously adjusting the spectral reference densities.

## Revendications

1. Procédé pour produire des copies photographiques en couleur (F) d'un original photographique transparent à copier (N) dans un appareil photographique à copier en couleur, comprenant les étapes de procédé suivantes:
a) l'original (N) est exploré zone par zone, de préférence point par point, dans un poste de mesure (1) de l'appareil photographique à copier en couleur,
b) la lumière de mesure transmise ou réfléchie de façon diffuse par chaque zone d'exploration de l'original (N) est amenée à un dispositif détecteur (3), décomposée spectralement et convertie en signaux de mesure électriques (f) fonction de la longueur d'onde et de l'intensité;
c) les signaux de mesure (f) sont numérisés et envoyés à une unité de calcul et d'exploitation (4) et exploités en vue de la détermination de quantités de lumière de tirage nécessaires dans les couleurs fondamentales, bleu, vert et rouge;
d) les quantités de lumière de tirage et les corrections d'exposition (e) déterminées pour l'original (N), sont converties en signaux de commande transmis à un poste d'exposition (5), dans lequel le matériau de tirage (M) est exposé en vue de la production des copies en couleur (F) de l'original (N);
caractérisé par les étapes de procédé suivantes:
e) les signaux de mesure (f) de chaque zone d'exploration de l'original (N) sont convertis en valeurs de densité spectrale (d), lesquelles sont comparées avec des densités spectrales de référence (d₀), avec formation de différences de densité spectrale (c);
f) les différences de densité spectrale (c) sont soumises à une compression de données, dans laquelle les n différences de densité (c) originales sont converties par une transformation orthogonale en m < n coefficients de transformation (k) et, dans le nombre des m coefficients de transformation (k), sont sélectionnés les coefficients à partir desquels les différences de densité (c) originales peuvent être reconstituées à l'intérieur d'un critère de précision pouvant être préfixé;
g) les coefficients de transformation sélectionnés sont utilisés comme données d'entrée d'une procédure de correction de couleur et de densité (D) et des écarts (Δk) sont déterminés; et
h) les écarts (Δ k) sont exploités selon les sensibilités spectrales du matériau de tirage (M), de préférence dans les trois couleurs fondamentales, bleu, vert et rouge, et les quantités de lumière de tirage et les corrections d'exposition (e) nécessaires pour les couleurs fondamentales, bleu, vert et rouge, sont déterminées à partir de ces écarts.

2. Procédé selon la revendication 1, caractérisé en ce que, parmi le nombre des m coefficients de transformation (k), on sélectionne, comme données d'entrée pour la correction de couleur et de densité, les trois coefficients présentant la plus grande variance, et que l'on choisit la plus petite erreur de reconstitution quadratique moyenne comme critère de précision.

3. Procédé selon la revendication 1 ou 2, caractérisé en ce que l'on établit la moyenne des coefficients de transformation non sélectionnés pour tout l'original et on tient également compte de cette moyenne dans la détermination des quantités de lumière de tirage et des corrections d'exposition (e) nécessaires.

4. Procédé selon la revendication 3, caractérisé en ce que l'on effectue la transformation orthogonale à l'aide d'une matrice de transformation réversible formée de m vecteurs de ligne avec n composants.

5. Procédé selon la revendication 4, caractérisé en ce que, comme transformation, on applique la transformation de Karhunen-Loève, en choisissant pour les m vecteurs de ligne de la matrice de transformation de Karhunen-Loève (KLT) des vecteurs réels et orthonormaux qui constituent les vecteurs de base de la matrice de transformation.

6. Procédé selon la revendication 5, caractérisé en ce que, comme vecteurs de base de la matrice de transformation de Karhunen-Loève (KLT), on utilise les vecteurs propres d'une matrice de covariance, établie à partir d'un grand nombre de différents originaux (N), des différences de densité (c).

7. Procédé selon la revendication 6, caractérisé en ce que les écarts (Δ k) sont retransformés à l'aide de la transformation de Karhunen-Loève inverse (IKLT) en n valeurs de correction de densité (Δd), lesquelles sont exploitées ensuite en vue de la détermination des quantités de lumière de tirage et des corrections d'exposition (e) nécessaires pour les trois couleurs fondamentales, bleu, vert et rouge.

8. Procédé selon la revendication 7, caractérisé en ce que, pour l'adaptation au matériau de tirage (M) employé des quantités de lumière de tirage et des corrections d'exposition (e) déterminées pour les couleurs fondamentales, bleu, vert et rouge, les n valeurs de correction de densité ( Δd) sont combinées avec une matrice de sensibilité (S) de type 3 x n, qui décrit les sensibilités spectrales du matériau de tirage (M).

9. Procédé selon la revendication 8, caractérisé en ce que des densités de voile (b) du matériau (T) de l'original sont déterminées, que ces densités de voile (b) sont déduites des densités spectrales (d) avant la détermination des différences de densité spectrale (c), et que les densités de voile (b) sont ajoutées aux valeurs de correction de densité (Δd) avant que celles-ci ne soient combinées avec la matrice de sensibilité (S) du matériau de tirage (M).

10. Procédé selon la revendication 9, caractérisé en ce que les différences de densité spectrale (c) sont combinées, avant leur transformation, avec- une fonction de pondération (W) réversible, et que les valeurs de correction de densité ( Δ d) sont combinées avec une fonction inverse (IW) de cette fonction de pondération (W) avant que ces valeurs ne soient combinées avec la matrice de sensibilité (S) du matériau de tirage (M).

11. Procédé selon la revendication 10, caractérisé en ce que la fonction de pondération (W) confère le poids le plus élevé aux différences de densité spectrale (c) comprises dans les domaines spectraux dans lesquels les sensibilités spectrales du matériau de tirage (M) sont maximales.

12. Procédé selon la revendication 10 ou 11, caractérisé en ce que les données d'entrée de la procédure de correction de couleur et de densité (D), constituées par les coefficients de transformation (k), sont adaptées, pour ce qui concerne leur ordre de grandeur ou leurs niveaux de signal, à l'aide d'une transformation de couleur (CT) réversible, aux ordres de grandeur ou aux niveaux de signal des données d'entrée nécessaires pour l'application de procédures connues de correction de couleur et de densité, et que cette adaptation artificielle est de nouveau annulée par combinaison des coefficients de transformation (Δk) corrigés en couleur et densité avec la fonction inverse (ICT).

13. Procédé selon une des revendication précédentes, caractérisé en ce que les densités spectrales de référence (dₒ) sont déterminées et adaptées de façon continue par l'établissement de la moyenne des valeurs de densité spectrale d'un grand nombre d'originaux (N).
